(19) Europäisches Patentamt
European Patent Office
Office européen des brevets

(11) EP 4 058 493 B1

(12) EUROPEAN PATENT SPECIFICATION

(45) Date of publication and mention of the grant of the patent:
**20.09.2023 Bulletin 2023/38**

(21) Application number: **20807702.4**

(22) Date of filing: **13.11.2020**

(51) International Patent Classification (IPC):
***C08G 18/08*** *(2006.01)* ***C08G 18/12*** *(2006.01)*
***C08G 18/28*** *(2006.01)* ***C08G 18/32*** *(2006.01)*
***C08G 18/34*** *(2006.01)* ***C08G 18/66*** *(2006.01)*
***C08G 18/75*** *(2006.01)* ***C09D 175/04*** *(2006.01)*
***C08G 18/50*** *(2006.01)*

(52) Cooperative Patent Classification (CPC):
(C-Sets available)
**C08G 18/348; C08G 18/0823; C08G 18/12; C08G 18/289; C08G 18/3228; C08G 18/5084; C08G 18/6659; C08G 18/755; C09D 175/04**

(Cont.)

(86) International application number:
**PCT/EP2020/081989**

(87) International publication number:
**WO 2021/094501 (20.05.2021 Gazette 2021/20)**

(54) **FLAME RETARDANT PREPOLYMER COMPOSITION, FLAME RETARDANT POLYMER COMPOSITION, AND THEIR MANUFACTURING METHODS AND USES**

FLAMMHEMMENDE PREPOLYMERZUSAMMENSETZUNG, FLAMMHEMMENDE POLYMERZUSAMMENSETZUNG UND DEREN HERSTELLUNGSVERFAHREN UND VERWENDUNGEN

COMPOSITION DE PRÉPOLYMÈRE IGNIFUGE, COMPOSITION DE POLYMÈRE IGNIFUGE, ET LEURS PROCÉDÉS DE FABRICATION ET LEURS UTILISATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.11.2019 DE 102019130997**

(43) Date of publication of application:
**21.09.2022 Bulletin 2022/38**

(73) Proprietor: **PolyU GmbH**
**46147 Oberhausen (DE)**

(72) Inventors:
- **KOLEKAR, Suresh**
  **Thane, 400610 (IN)**
- **RIEKHOF, Alexander**
  **45144 Essen Nordrhein-Westfalen (DE)**
- **DIETRICH, Annika**
  **45701 Herten Nordrhein-Westfalen (DE)**
- **JANKNECHT, Ralf**
  **46244 Bottrop-Kirchhellen Nordrhein-Westfalen (DE)**
- **ZAKRZEWSKI, Uwe**
  **47802 Krefeld Nordrhein-Westfalen (DE)**

(74) Representative: **Geskes, Christoph**
**Geskes Patent- und Rechtsanwälte**
**Gustav-Heinemann-Ufer 74b**
**50968 Köln (DE)**

(56) References cited:
**WO-A1-2009/142999**
**WO-A1-2017/055356**
**WO-A1-2019/204625**
**JP-A- 2015 193 763**
**US-A1- 2014 000 751**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08G 18/12, C08G 18/289;**
**C08G 18/12, C08G 18/3228**

## Description

The present invention relates to a flame retardant prepolymer composition which is intended primarily for the use in a flame retardant polymer. Further, the present invention relates to a flame retardant polyurethane urea composition, methods to prepare the flame retardant prepolymer and the flame retardant polyurethane urea composition, and a use of said flame retardant polyurethane urea composition.

In industry, polyurethane coatings are used to improve the hydrostatic resistance, life endurance, breathability of textiles and flame resistance of the coated objects. Usually solvent-based polyurethanes are applied due to fast drying of the polyurethane coating. Nowadays, it is commonly known that the used organic solvents in the polyurethane coatings are harmful to health and the environment especially during manufacture and drying of the polyurethane coating. Additionally, solvent-based polyurethane coatings are often flammable. Therefore, it is an aim to replace the organic solvents by a less harmful solvent. Current applications show that aqueous polyurethane dispersions may overcome these disadvantages.

In order to meet fire protection requirements, the polyurethane dispersions are further equipped with flame retardants. The flame retardants are used to inhibit or completely prevent combustion. The processing and service properties of flame retardant coatings can differ significantly from those without flame retardants. Not only the flammability of the used solvent is important during manufacturing, but also the resulting polyurethane coating after evaporation of the solvent must be flame retardant due to the flammability of polyurethane itself.

A distinction is made between halogenated, phosphorus-containing and inorganic flame retardants in terms of chemistry and mode of action. Halogenated flame retardants act in the gas phase by chemically interrupting the combustion process. Chlorine or bromine containing halogenated flame retardants show a decreased flammability but as side effect toxic degradation products are created during the combustion of the flame retardant. Inorganic flame retardants such as aluminum hydroxide or magnesium hydroxide decompose in the event of a fire, splitting off water, diluting the fire gas and cooling the fire. These mineral flame retardants are inexpensive and generally harmless from an environmental point of view. Due to the high quantities added, however, the properties of the materials are frequently impaired by the addition of inorganic flame retardants.

Phosphor-containing flame retardants can also act in the gas phase, but this is not preferred. In the condensed phase, oxygen-rich phosphorus compounds react preferentially, for example phosphates, phosphonates, while the gas phase mechanism is influenced by hydrogen- and carbon-rich phosphorus compounds. Phosphor-containing flame retardants form a protective layer on the burning surface by charring. This layer has an insulating effect and insulates the oxygen supply to the source of the fire. The phosphor-containing flame retardants act by forming a "polyphosphoric acid" protective layer in the condensed phase. At the same time, water is formed by charring, which has a cooling effect. Phosphor-containing flame retardants are largely environmentally neutral and relatively effective in relation to the amount of phosphor used. Typical phosphorus compounds that can be added as flame retardant additives are ammonium polyphosphate, melamine polyphosphate, red phosphorus, metal phosphinates, phosphorus and phosphonic acid esters, and phosphazenes. The disadvantage of all these flame-retardant additives is that these inorganic compounds are incompatible with the binder of the coating and can also be distributed insufficiently evenly in the coating.

WO 2017/055356 A1 discloses a flame retardant waterborne coating composition comprising: a) water dispersed hydroxyl-terminated polyurethane particles, and b) isocyanate crosslinker, wherein (i) the hydroxyl-terminated polyurethane contains phosponate oligomer as a building block in an amount of from 3 to 75 parts by weight relative to the hydroxyl-terminated polyurethane, wherein the phosphonate oligomer contains units according to structural formula in which n is an integer from 1 to 20, R is a C1-20 alkyl, C2-20 alkene, C2-20 alkyne, C5-20 cycloalkyl or C6-20 aryl, and R2 is an aliphatic or aromatic group, (ii) the hydroxyl number of the hydroxyl-terminated polyurethane is from 5 to 180 mg KOH/g polyurethane, (iii) the molar ratio of hydroxyl groups present in the hydroxyl-terminated polyurethane to isocyanate groups of the crosslinker is from 0.2 to 2.0.

JP 2015 1 93763 A discloses an urethane resin having at least a structural unit derived from a diol and a structural unit derived from a polyfunctional isocyanate. The at least one diol may have a.) different units R, whereby R represents a group selected from a hydrogen atom, a hydrocarbon group having 1 to 12 carbon atoms or a halogen atom; b.) further units R9 represents a hydrogen atom, an alkyl group having 1 to 10 carbon atoms, a phenyl group or a phenoxy group; and c.) units X each independently represents a group selected from a direct bond, a divalent hydrocarbon group having 1 to 13 carbon atoms, -O-, -S-, -SO- and -CO-; and n represents a number of 1 to 20.

WO 2009/142999 A1 discloses a coating composition comprising polyurea formed from a reaction mixture comprising: (a) a first component comprising isocyanate, wherein said isocyanate comprises an isocyanate functional prepolymer formed from a reaction mixture comprising isocyanate and a material comprising a phosphorus-containing polyol; and (b) a second component comprising an amine.

The object of the present invention is to provide a flame retardant prepolymer composition as well as a flame retardant polyurethane composition which overcomes the aforementioned disadvantages. They should have a superior flame resistance, should be environmental unobjectionable and should exhibit good coating abilities.

Said object of the present invention is solved by a flame retardant prepolymer composition comprising at least one isocyanate-terminated polyurethane prepolymer, wherein the at least one isocyanate-terminated polyurethane prepolymer is prepared by at least one diol and/or at least one polyol, and an at least one isocyanate, and contains at least one phosphonate oligomer, phosphonate monomer or a mixture thereof, used as a first building block, in an amount of from 5 to 75 parts by weight, referring to the total amount of the at least one isocyanate-terminated polyurethane prepolymer, wherein the at least one phosphonate oligomer, phosphonate monomer or a mixture thereof contains units according to the following structural formula I:

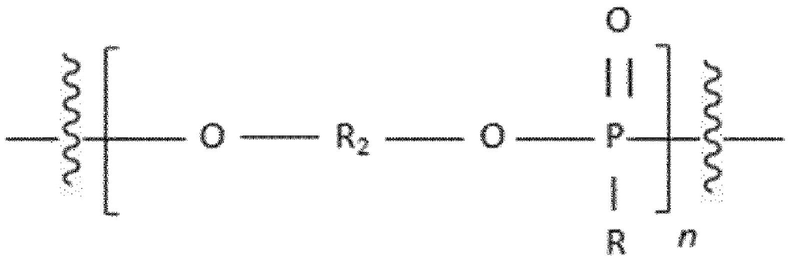

(I)

in which n is an integer from 1 to 20, R is a $C_{1-20}$ alkyl, $C_{2-20}$ alkene, $C_{2-20}$ alkyne, $C_{3-20}$ cycloalkyl, or $C_{6-20}$ aryl, and $R_2$ is an aliphatic and/or aromatic group, wherein R and $R_2$ may comprise heteroatoms;
wherein a NCO value is in a range between 4.1 % ±20 % to 6.4 % ±20 % obtained by titration against a dibutylamine/toluene solution as per ISO 14896: 2009-07 Method A, wherein the term "NCO value" defines the percentage of free isocyanate groups of the at least one isocyanate-terminated polyurethane prepolymer in the inventive flame retardant prepolymer composition,
whereby the diol and the polyol are selected from a group comprising polyetherglycols, polyester diols, polycarbonates, polytetrahydrofurans, dimer diols, fatty acids, dimerized fatty acid based diols and/ or (BES: biobased) polyester based diols in the manufacturing process of the at least one isocyanate-terminated polyurethane prepolymer.

The term "alkyl" or "alkyl group" refers to an unbranched or branched hydrocarbon or group of 1 to 20 carbon atoms, such as but not limited to methyl, ethyl, n-propyl, isopropyl, n-butyl, isobutyl, t-butyl, octyl, decyl, tetradecyl, hexadecyl, elcosyl, tetracosyl and the like. "Cycloalkyl" or "cycloalkyl groups" are unbranched or branched hydrocarbons in which all or some of the carbons are arranged in a ring such as but not limited to cyclopentyl, cyclohexyl, methylcyclohexyl, and the like. The term "aryl" or "aryl group" refers to monovalent aromatic hydrocarbon radicals or groups of one or more fused rings in which at least one ring is aromatic in nature. Aryls may include but not limited to phenyl, naphthyl, biphenyl ring systems and the like. The aryl group may be unsubstituted or substituted with a variety of substituents including but not limited to alkyl, alkenyl, halide, benzylic, alkyl or aromatic ether, nitro, cyano and the like and combinations thereof. Substituent refers to a molecular group that replaces a hydrogen in a compound and may include but is not limited to trifluoromethyl, nitro, cyano, $C_{1-20}$ alkyl, aromatic or aryl, halide (F, Cl, Br, I), $C_{1-20}$ alkyl ether, $C_{5-20}$ alkyl ester, benzyl halide, benzyl ether, aromatic or aryl ether, hydroxy, amino, alkylamino (-NHR'), diaklylamino (-NR'R) or other groups which do not interfere with the formation of the diaryl alkylphosphonate. The term "heteroatom" refers to an atom which replaces a carbon in the backbone of the molecular structure in a compound and may include but is not limited to halide (F, Cl, Br, I), nitrogen, sulfur, silicon, boron, phosphor, selenium or metals such as lithium and magnesium.

The terms "flame retardant" or "flame resistance" as used herein, means that the composition exhibits a limiting oxygen index (LOI) of at least 27. "Flame retardant" or "flame resistance" may also be tested by measuring the afterburning time in accordance with the UL-94 VTM test.

The term "NCO value" defines the percentage of free isocyanate groups of the at least one isocyanate-terminated polyurethane prepolymer in the inventive flame retardant prepolymer composition. The term "NCO value"in the sense of the present invention and as used in claim 1 refers to the experimental NCO value. Said experimental NCO value is measured in accordance with ISO 14896: 2009-07 Method A by titration against a dibutylamine/toluene solution. The experimental NCO value is calculated on the basis of the so-called theoretical NCO value, also determined in accordance with ISO 14896: 2009-07 Method A. The theoretical NCO value is calculated by the following formula:

$$NCO_{theoretical}\,[\%] = \frac{(n_{Isocyanate} - \sum n_{polyol}) \cdot MW_{NCO-group}}{m_{reaction}} \cdot 100\%$$

wherein n is the amount of substance, MW is the molecular weight and $m_{reaction}$ defines the overall mass of the reaction compounds. This theoretical NCO value gives the range of the non reacting isocyanate groups of the reaction mixture and is needed for the calculation of the actual free isocyanate groups after reaction to obtain the inventive flame retardant prepolymer composition.

The purpose of the experimental NCO value is that it gives a measure for the finishing of the reaction. A blank sample and a sample of the inventive flame retardant prepolymer composition prepared in accordance to ISO 14896: 2009-07 Method A are titrated with hydrochloric acid (HCl). The experimental NCO value is calculated by the following formula:

$$NCO_{experimantal}\,[\%] = \frac{4.202 \cdot (V_{blank} - V_{sample}) \cdot N}{non-volative\ content_{sample} \cdot NCO_{theoretical,\ sample}}$$

wherein $V_{blank}$ defines the hydrochloric acid (HCl) required for titration of the blank in ml, $V_{sample}$ defines the (HCl) required for titration of the sample in ml, N is the normality of the used HCl in meq/ ml and 4.202 is a constant as follows:

$$4.202 = \frac{42.02 \cdot 100\%}{1000}$$

wherein 42.02 is the equivalent of the NCO in mg/ meq and conversion of g in 1000 mg. The non-volatile content gives the wt-% of the at least one isocyanate-terminated polyurethane prepolymer in the inventive flame retardant prepolymer composition. The non-volative content is calculated as follows:

$$non-volatile\ content\ [wt-\%] = \frac{m_{dry}}{m_{wet}} \cdot 100\%$$

wherein $m_{wet}$ is the weight before and $m_{dry}$ is the weight after heating the sample of the the inventive flame retardant prepolymer composition. The experimental NCO value of the inventive flame retardant prepolymer composition is in a range between 4.1 % ±20 % to 6.4 % ±20 %.

The inventive flame retardant prepolymer composition comprises at least one isocyanate-terminated polyurethane prepolymer, which is prepared in-situ by a polyaddition reaction of at least two building blocks. An at least one diol and an at least one isocyanate are required for the polyaddition to obtain polyurethane. The polyurethane can be adapted to the required fields of application by modifying its properties. The properties of the polyurethane may be adapted by using different building blocks as flame retardant components, branched or unbranched diols, diols with multiple functionalizations to create linear or branched polyurethanes and further functionalization by incorporating ionic or water-soluble compounds. By implementing an at least one phosphonate oligomer, phosphonate monomer or a mixture thereof according to formula (I) into the least one isocyanate-terminated polyurethane prepolymer under reaction with an at least one diol and an at least one isocyanate, the flame retardant capability is incorporated into the backbone of the least one isocyanate-terminated polyurethane prepolymer. The at least one isocyanate-terminated polyurethane prepolymer is comprised in the flame retardant prepolymer composition in an amount of approximately 80 wt-% to approximately 95 wt-%, in each case referring to the total amount of the flame retardant prepolymer composition.

The different building blocks of the at least one isocyanate-terminated polyurethane prepolymer as the at least one phosphonate oligomer, phosphonate monomer or a mixture thereof, the at least one diol and the at least one isocyanate are described in the following.

According to the present invention the at least one phosphonate oligomer, phosphonate monomer or a mixture thereof is used as a first building block. The at least one phosphonate oligomer, phosphonate monomer or a mixture thereof is further referred to as at least one phosphonate oligomer without being limited to the phosphonate oligomer. The at least one phosphonate oligomer used in the preparation of the at least one isocyanate-terminated polyurethane prepolymer is preferably a phosphonate diol selected from the group consisting of a random co-oligo(phosphonate carbonate), a block co-oligo(phosphonate carbonate), a random co-oligo(phosphonate ester), a block co-oligo(phosphonate ester) or any mixture thereof. Described herein are reactive phosphonate oligomers, random or block co-oligo(phosphonate ester)s, and random or block co-oligo(phosphonate carbonate)s as the at least one phosphonate oligomer. In various embodiments, the at least one phosphonate oligomer may include reactive substituents such as, for example, hydroxyl groups, epoxy groups, isocyanate groups, vinyl groups, vinyl ester groups, isopropenyl groups, and the like and combinations thereof. The reactive substituents may allow the at least one phosphonate oligomer to react chemically with other monomers, oligomers, or polymers in polymer compositions leading to crosslinking or chain

extension or a combination thereof. For example, reactive substituents such as hydroxyl groups, epoxy groups, vinyl groups, vinyl ester groups, isopropenyl groups, or isocyanate groups are capable of reacting with functional groups such as, but not limited to, alcohols, carboxylic acids and salts thereof, anhydrides, acyl chlorides, epoxides, aldehydes, ketones, amines, thiols, Grignard reagents, vinyl groups, acetylene groups and sodium hydroxide acids and salts thereof. When monomers, oligomers, or polymers including these functional groups are combined with the at least one phosphonate oligomer having hydroxyl groups, epoxy groups, vinyl groups, vinyl ester groups, isopropenyl groups, or isocyanate groups crosslinking or chain extension or a combination of both may occur. The reactive phosphonate oligomer may thereby impart flame resistance while not detracting from the mechanical properties of the base polymer of the polymer composition. The at least one phosphonate oligomer of the claimed invention may be linear or branched.

Further, the at least one phosphonate oligomer according to formula (I), wherein n is preferably from 1 to 10, and $R^2$ is preferably an aromatic group. Further preferred, R and $R^2$ may comprise heteroatoms. Even more preferred, the phosphonate oligomer used in the preparation of the at least one isocyanate-terminated polyurethane prepolymer is a copolymer of bisphenol-A and diphenyl methyl phosphonate. In an especially embodiment R of the at least one phosphonate oligomer is preferably a methyl group. In a further preferred embodiment the phosphonate oligomer building block has a structure according to one of the following formulae:

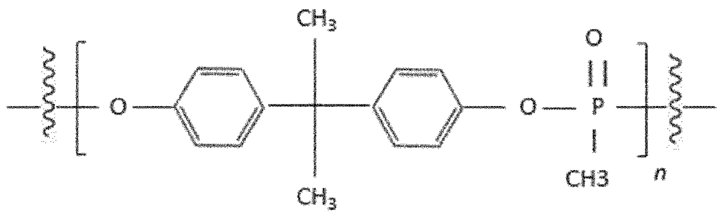

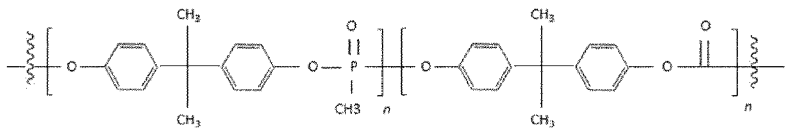

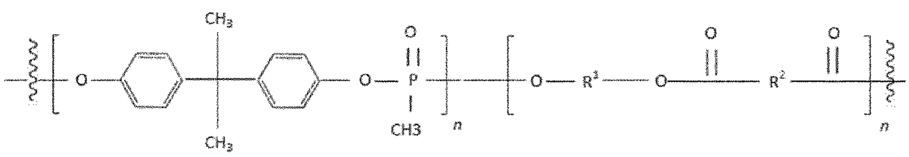

(II)

in which $R^1$ and $R^2$ are aliphatic or aromatic hydrocarbons, and n is an integer from 1 to 20.

The phosphonate oligomer chain according to formula II may include alternating phosphonate and carbonate or ester monomers or short segments in which several phosphonate or carbonate or ester monomers are linked by an aromatic dihydroxide. The length of such segments may vary within individual random co-oligo(phosphonate carbonate)s or co-oligo(phosphonate ester). The at least one phosphonate oligomer may be comprised as a liquid or a solid. If the at least one phosphonate oligomer is a liquid a dynamic viscosity at 25 °C of approximately 150 mPa*s to approximately 4.500 mPa*s and preferred of approximately 190 mPa*s to approximately 4.200 mPa*s is required. The molecular weight $M_n$ of the at least one phosphonate oligomer is in a range of approximately 900 g/ mol to approxymately 5000 g/ mol and further preferred in a range from approximately 1000 g/ mol to approximately 4000 g/ mol, in each case referring to the average molar mass of the at least one phosphonate oligomer. The least one phosphonate oligomer is preferably comprised in an amount of approximately 5 wt to approximately 75 wt-% and further preferred in an amount of approximately 10 wt-% to approximately 55 wt-%, in each case referred to the total amount of the flame retardant prepolymer composition.

The inventive flame retardant prepolymer composition comprises according to the invention at least one isocyanate-terminated polyurethane prepolymer, which is obtained in accordance with the invention by using at least one diol and/or at least one polyol, whereby preferably the diol and the polyol are selected from a group comprising polyetherglycols, polyester diols, polycarbonates, polytetrahydrofurans, dimer diols, fatty acids, dimerized fatty acid based diols and/ or polyester based diols preferred biobased polyester diols in the manufacturing process of the at least one isocyanate-terminated polyurethane prepolymer. The at least one diol and/or at least one polyol is preferably used as a second building block. Preferably, the at least one diol and/or at least one polyol is obtained by a reaction of at least one lactone and at least one diol. The at least one lactone is preferred ε-caprolactone. The lactone used in the at least

one isocyanate-terminated polyurethane prepolymer remarkably increases the amount of oxygen in the backbone of the at least one isocyanate-terminated polyurethane prepolymer. In addition, the resulting coating by using lactones in the at least one isocyanate-terminated polyurethane prepolymer gives a more flexible and clearer film compared to other polyols such as polycarbonate polyols. The at least one diol and/or at least one polyol is preferably a polyester polyol and more preferred a biobased polyester polyol selected from a group comprising biobased polyesters, dimer fatty acid based polyester diol having molecular weight ($M_n$) in a range of approximately 1000 g/mol to approximately 2000 g/mol, dehydrated castor oil and/ or fatty acid thereof. The at least one diol and/or at least one polyol is preferably a solid. The hydroxy number (OH number) of the at least one diol and/or at least one polyol is preferred in a range of approximately 90 mg KOH/ g to approximately 150 mg KOH/ g and more preferred in a range of approximately 100 mg KOH/ g to approximately 140 mg KOH/ g, in each case referring to the total amount of the at least one diol and/or at least one polyol. The molecular weight (Mn) of the at least one diol and/or at least one polyol is preferably in a range between approximately 900 g/ mol and approximately 3000 g/ mol and more preferred between approximately 1000 g/ mol and approximately 2000 g/ mol, in each case referring to the total average molecular weight of the at least one diol and/or at least one polyol. The at least one diol and/or at least one polyol is preferably comprised in a range of approximately 5 wt-% to approximately 50 wt-%, further preferred in a range of approximately 10 wt-% to approximately 50 wt-%, and even more preferred in a range from approximately 35 wt-% to approximately 45 wt-%, in each case referring to the total amount of the inventive flame retardant prepolymer composition.

Preferably, the at least one diol and/or at least one polyol is at least one multifunctional diol selected from the group comprising at least one trifunctional diol, branched diol with an at least one hydroxyl group and an at least one carboxyl group, linear non-ionic polyethylene glycol ether diol or a mixture thereof. The multifunctional diol is selected from glycerol, dimethylol popionic acid (DMPA), trimethylol propane, polyether gycol and/or silicone diols. Further preferred, two at least one diol and/or at least one polyol are comprised from the at least one isocyanate-terminated polyurethane prepolymer, wherein one at least one diol and/or at least one polyol is obtained by a reaction of at least one lactone and at least one diol and another is an at least one multifunctional diol. Therefore, the at least one multifunctional diol is preferably a third building block. The at least multifunctional diol is introduced into the at least one isocyanate-terminated polyurethane prepolymer to enhance the dispersibility of the at least one isocyanate-terminated polyurethane prepolymer in polar solvents and/ or to obtain free functional groups for at least one cross- linking step. A branched diol with an at least one hydroxyl group and an at least one carboxyl group introduces anionic functionality into the backbone of the at least one isocyanate-terminated polyurethane prepolymer. The anionic functionality of the backbone creates adequate polarity to enhance the dispersibility in polar solvents especially water. A linear non-ionic polyethylene glycol ether diol creates partial higher solubility in polar solvents, especially, water of the at least one isocyanate-terminated polyurethane prepolymer backbone. The at least one multifunctional diol comprises at least three functional groups. To apply an at least one cross-linking step later on, free functional groups in the backbone are needed like but not limited to unsaturated double bonds, amino, hydroxy, carboxy, thiol, nitro or a combination thereof. These free functional groups may be incorporated into the at least one isocyanate-terminated polyurethane prepolymer by the at least one multifunctional diol. The at least one multifunctional diol is preferably comprised in an amount of approximately 0,2 wt-% to approximately 7 wt-% and further preferred in an amount of approximately 0,2 wt-% to ap-proximnately 5 wt-%, in each case referring to the total amount of the flame retardant prepolymer composition.

At least one isocyanate is comprised from the at least one isocyanate-terminated polyurethane prepolymer. The at least one isocyanate is preferably a fourth building block. The active hydrogen in the at least one phosphonate oligomer, the at least one diol and/ or at least one polyol and at least one trifunctional diol reacts with the at least one isocyanate, so that the at least one isocyanate is chemically bonded via covalent bonds to the first, second and third building block. The at least one isocyanate is preferably a diisocyanate. The at least one isocyanate is preferred a diisocyanate selected from the group comprising aromatic diisocyanate, aliphatic diisocyanates and cycloaliphatic diisocyanates, such as toluene diisocyanate (TDI), p-phenylene diisocyanate (PPDI), 4,4'-diphenylmethane diisocyanate (MDI), p,p'-bisphenyl diisocyanate(BPDI), isophorone diisocyanate (IPDI), 1,6-hexamethylene diisocyanate (HDI), dicyclohexylmethane, hydrogenate diphenylmethane-4,4'-diisoyanate ($H_{12}$MDI), meta-tetramethylxylene diisocyanate (TMXDI) and a mixture thereof. Additionally, the at least one isocyanate may comprise substituents of halo, nitro, cyano, alkyl, alkoxy, haloalkyl, hydroxyl, carboxy, amido, amino, or combinations thereof. The at least one isocyanate has a viscosity at 25°C measured by DIN EN ISO 3219/A.3 in a range of approximately 1 mPa*s to approxymately 15 mPa*s and preferred in a range of approximately 2 mPa*s to approximately 13 mPa*s. The density of the at least one isocyanate at 20°C measured by DIN EN ISO 2811 is in a range of approximately 1,00 g/ $cm^3$ to approximately 1,10 g/ $cm^3$ and preferred in a range of approximately 1,01 g/ $cm^3$ to approximately 1,09 g/ $cm^3$. The used excess of the at least one isocyanate depends on the calculated free isocyanate-value calculated via the theoretical NCO value as set forth above.The theoretical NCO value of the at least one isocyanate is in a range of approximately 25 wt-% to approximately 55 wt-%, and preferably in a range of approximately 30 wt-% to approximately 50 wt-%, in each case referred to the total amount of the at least one isocyanate molecule. The at least one isocyanate is preferably comprised in an amount of approximately 10 wt-% to approximately 50 wt-%, further preferred in an amount of 15 wt-% to approximately 45 wt-%, in each case referred to the total amount of the flame retardant prepolymer composition.

Preferably, the flame retardant prepolymer composition comprises at least one non-aqueous solvent. The at least one non-aqueous solvent is preferably selected from a group comprising acetone, diethylamine, methanol, isopropanol, dichloromethane or a mixture thereof. To obtain the flame retardant prepolymer composition the reaction is carried out in an at least one non-aqueous solvent, the non-aqueous solvent preferably having a low boiling point. A low boiling point is advisable to evaporate the non-aqueous solvent under reduced pressure after the preparation of the isocyanate-terminated polyurethane polymer. Non-aqueous solvents which are recyclable are preferably used due to lower production costs, lower industrial waste and resulting better environmental sustainability. Therefore high boiling solvents such as N-methyl pyrrolidone (NMP) are not in the sense of the invention. Further on, the at least one non-aqueous solvent is used to lower the viscosity of the gained inventive at least one isocyanate-terminated polyurethane prepolymer. The at least one non-aqueous solvent is used in range of approximately 5 wt-% to approximately 20 wt-% and preferred in a range from approximately 8 wt-% to approximately 17 wt-%, in each case referred to the total amount of the flame retardant prepolymer composition.

The present invention further relates to a flame retardant polyurethane urea composition obtained from the flame retardant prepolymer composition as extensively described above by reacting the flame retardant prepolymer composition in at least one cross-linking step with at least one crosslinking agent selected from a group comprising diamines, triamines, organic aminosilanes and/or carbodiimides. Preferably, the at least one diamine and/ or triamine is selected from a group comprising alkyldiamines and alkyltriamines. Examples for cross-linking agents are diamines such as ethylendiamine, hydrazine, hydrazine hydrate, diethanol amine, 2-hydroxy amine; triamines such as diethylene triamine; amino silanes such as $\gamma$-aminopropyltriethoxysilane and siloxanes. The at least one crosslinking agent may act as a chain extender as well. The at least one crosslinking agent provides several functional groups so that the individual strands of the at least one isocyanate-terminated polyurethane prepolymer can be cross-linked to create a polymeric network. The aforesaid at least one crosslinking agent is forming the mentioned polymeric network by forming urethane urea linkages. Therefore, the obtained inventive isocyanate-terminated polyurethane may also be described as an isocyanate-terminated polyurethane urea. The purity of the at least one crosslinking agent is preferably above 97 %. The density of the at least one crosslinking agent at 25 °C measured according to DIN 51757 is in a range of approximately 0,80 g/ $cm^3$ to approximately 1,10 g/ $cm^3$, and preferably in a range of approximately 0,92 g/ $cm^3$ to approximately 1,05 g/ $cm^3$. The at least one crosslinking agent is used in a range of approximately 0,5 wt-% to approximately 8 wt-%, which depends on the experimental measured isocyanate-value, further referred to as NCO-value of the flame retardant prepolymer composition, in each case referring to the total amount of the flame retardant polyurethane composition.

Preferably, in the at least one crosslinking step, before the at least one crosslinking step, or after the at least one crosslinking steps, water is added in order to obtain a polyurethane composition dispersion. Further preferred a chain extension step should be carried out before adding water.

Preferably, at least one neutralization step is carried out before the at least one crosslinking step. The at least one neutralization step is carried out by using at least one neutralizing agent selected of a group comprising tertiary amines, amino alcohols, metal hydroxides, ammonia or a mixture thereof. Examples of neutralizing agents are trialkyl amines such as trimethylamine, triethyl amine and tributyl amine; amino alcohols such as dimethyl ethanolamine; tertiary amine compounds such as N-alkyl-N,N-dialkanol amines and triethanol amine; basic compounds such as ammonia, trimethyl ammonium hydroxide, sodium hydroxide, potassium hydroxide and lithium hydroxide. This at least one neutralizing agent neutralizes cationic groups. Cationic groups were implemented by the aforesaid at least one multifunctional diol as third building block in the preparation of the flame retardant polyurethane composition. The at least one neutralizing agent is preferably used in a molar ratio of approximately 0,5 to approximately 1 to the total amount of the at least one multifunctional diol . The at least one neutralizing agent is used in a range of approximately 1 wt-% to approximately 3 wt-%, in each case referring to the total amount of the flame retardant polyurethane composition.

The inventive flame retardant polyurethane composition is an aqueous isocyanate-terminated polyurethane urea dispersion. Due to the incorporated ionic or water-soluble at least one multifunctional diol as third building block the aqueous isocyanate-terminated polyurethane urea dispersion is stable at normal storage, handling and transport. The inventive flame retardant polyurethane urea composition obtained after the at least one cross-linking step comprises a non-volatile content of the flame retardant polyurethane composition in a range of approximately 25 wt-% to approximately 50 wt-% and preferably in a range of approximately 30 wt-% to approximately 45 wt-%, in each case referring to the total amount of the flame retardant polyurethane urea composition. Further on, the pH value of the inventive flame retardant polyurethane urea composition at 25 °C is preferred in a range of approximately 8.0 to approximately 10.0. The viscosity of the inventive flame retardant polyurethane urea composition is preferably in a range of approximately 50 mPa*s to approximately 2000 mPa*s at 20°C with a rotational frequency of 20 rpm. Due to the incorporated at least one phosphonate oligomer as a first building block in the isocyanate-terminated polyurethane of the inventive flame retardant polyurethane urea composition the flame retardant effect is evenly distributed throughout the whole isocyanate-terminated polyurethane urea. Therefore, the inventive flame retardant polyurethane urea composition contains good

flame resistance by itself and no further flame retardant additives have to be added to the inventive composition. This is proven by the flammability of the inventive flame retardant polyurethane composition, which is measured by the UL 94 VTM assay.

The present invention further relates to a method for manufacturing the flame retardant prepolymer composition as described above, whereby

- mixing of at least one phosphonate oligomer, used as a first building block, at least one polyether glycol, at least one diol and/or at least one polyol with at least one non-aqueous solvent, and heating said solution to a temperature in a range from 30°C ±20 % to 100°C ±20 %, and preferred from 50°C ±20 % to 85 °C ±20 %;
- adding at least one isocyanate in excess to relation to the total amount of the at least one polyetherglycol, at least one diol and/or at least one polyol;
- heating the obtained solution to a temperature in a range from 65°C ±20 % to 96°C ±20 % until a NCO value is in a range between 4,1 % ±20 % to 6.4 % ±20 %, obtained by titration against a dibutylamine/tolulene solution as per ISO 14896: 2009-07 Method A, wherein the term "NCO value" defines the percentage of free isocyanate groups of the at least one isocyanate-terminated polyurethane prepolymer in the inventive flame retardant prepolymer composition.

Preferably, the method for manufacturing the flame retardant polyurethane urea composition comprises further

- providing a flame retardant prepolymer composition manufactured as described above;
- adding water to obtain a polyurethane dispersion; and
- adding at least one crosslinking agent.

Further preferred, the non-aqueous solvent is evaporated in order to obtain an aqueous iso-cyanate-terminated polyurethane urea composition. The at least one non-aqueous solvent is preferably selected from a group comprising acetone, diethylamine, methanol, isopropanol, dichloromethane or a mixture thereof. To obtain the flame retardant prepolymer composition the reaction is carried out in an at least one non-aqueous solvent, the non-aqueous solvent preferably having a low boiling point. A low boiling point is advisable to evaporate the non-aqueous solvent under reduced pressure after the preparation of the isocyanate-terminated polyurethane polymer. Non-aqueous solvents which are recyclable are preferably used due to lower production costs, lower industrial waste and resulting better environmental sustainability. Therefore high boiling solvents such as N-methyl pyrrolidone (NMP) are not in the sense of the invention. Further on, the at least one non-aqueous solvent is used to lower the viscosity of the gained inventive at least one isocyanate-terminated polyurethane prepolymer.

The present invention further relates to the use of the flame retardant polyurethane urea composition as described above and obtained by the manufacturing method also described above as a flame retardant component in paints, lacquers, intumescent coatings, wood, leather and paper. The inventive flame retardant polyurethane urea composition for the use as flame retardant component in paints, lacquers, intumescent coatings, wood and paper of the present invention is remarkably useful for industry, since it can provide articles having excellent flame resistance as well as it has no bleeding on the coated surfaces of flame retardant additives. In addition, no harmful substances such as dioxin are produced during combustion and no environmental hormones are used, since the phosphonate oligomer building block is used as a polymeric building block in the flame retardant polyurethane urea composition to achieve the flame retardant effect.

As far as the term weight percent or % by weight is used with respect to the components being comprised from the claimed grease composition, the term weight percent is referred to the amount of one or more components relative to the total amount of the composition throughout this specification, except where expressively stated otherwise. The expression "wt-%" is used throughout the present invention as an abbreviation for weight percent if not indicated otherwise.

In the context of the invention, the expressions "about" and "approximately" in connection with numerical values or ranges are to be understood as a tolerance range, which a person skilled in the art would consider as common or reasonable based on his or her general knowledge and in view of the invention as a whole. In particular, the expressions "about" and "approximately" refer to a tolerance range of ±20 %, preferred ±10 % and further preferred ±5 % with respect to the designated value. The lower end values and the upper end values of the various ranges, especially the weight percent ranges, but not restricted thereto, claimed in the present invention may be combined with each other in order to define new ranges.

Further, in the context of the present invention, all references to standards, norms, or standardization protocols, e.g. ISO, ASTM etc., in connection with properties, numerical values or ranges referred to are to be understood as the latest updated version of said standard, norm, or standardization protocol being in force at the date of filling of the invention.

In an especially preferred embodiment of the present invention, a flame retardant prepolymer composition is defined comprising approximately 80 wt-% to approximately 95 wt-% of at least one isocyanate-terminated polyurethane

prepolymer and approximately 5 wt-% to approximately 20 wt-% of at least one non-aqueous solvent, wherein the at least one isocyanate-terminated polyurethane prepolymer contains approximately 5 wt-% to approximately 75 wt-% of at least one phosphonate oligomer, phosphonate monomer or a mixture thereof as a first building block, referring to the total amount of the at least one isocyanate-terminated polyurethane prepolymer.

In a further preferred embodiment of the present invention, a flame retardant prepolymer composition is defined comprising approximately 80 wt-% to approximately 95 wt-% of at least one isocyanate-terminated polyurethane prepolymer and approximately 5 wt-% to approximately 20 wt-% of at least one non-aqueous solvent, wherein the at least one isocyanate-terminated polyurethane prepolymer contains approximately 5 wt-% to approximately 75 wt-% of at least one phosphonate oligomer, phosphonate monomer or a mixture thereof as a first building block, referring to the total amount of the at least one isocyanate-terminated polyurethane prepolymer, wherein the at least one phosphonate oligomer may be comprised as a liquid or a solid , wherein the molecular weight $M_n$ of the at least one phosphonate oligomer is in a range of approximately 900 g/ mol to approximately 5000 g/mol, in each case referring to the average molecular weight of the at least one phosphonate oligomer.

In a further preferred embodiment of the present invention, a flame retardant prepolymer composition is defined comprising approximately 80 wt-% to approximately 95 wt-% of at least one isocyanate-terminated polyurethane prepolymer and approximately 5 wt-% to approximately 20 wt-% of at least one non-aqueous solvent, wherein the at least one isocyanate-terminated polyurethane prepolymer contains approximately 5 wt-% to approximately 75 wt-% of at least one phosphonate oligomer, phosphonate monomer or a mixture thereof as a first building block, referring to the total amount of the at least one isocyanate-terminated polyurethane prepolymer, wherein the at least one diol and/or at least one polyol is preferably a solid, wherein the hydroxyl number (OH number) of the at least one diol and/or at least one polyol is preferred in a range of approximately 90 to approximately 150 mg KOH/ g, in each case referring to the total amount of the at least one diol and/or at least one polyol, wherein the molecular weight (Mn) of the at least one diol and/or at least one polyol is preferably in a range between approximately 900 g/ mol and approximately 3000 g/mol, in each case referring to the total average molecular weight of the at least one diol and/or at least one polyol, wherein the at least one diol and/or at least one polyol is preferably comprised in a range of approximately 5 wt-% to approximately 50 wt-%, in each case referring to the total amount of the flame retardant prepolymer composition.

In a further preferred embodiment of the present invention, a flame retardant prepolymer composition is defined comprising approximately 80 wt-% to approximately 95 wt-% of at least one isocyanate-terminated polyurethane prepolymer and approximately 5 wt-% to approximately 20 wt-% of at least one non-aqueous solvent, wherein the at least one isocyanate-terminated polyurethane prepolymer contains approximately 5 wt-% to approximately 75 wt-% of at least one phosphonate oligomer, phosphonate monomer or a mixture thereof as a first building block, referring to the total amount of the at least one isocyanate-terminated polyurethane prepolymer, wherein preferably a third building block selected from the group comprising at least one trifunctional diols, branched diols with an at least one hydroxyl group and an at least one carboxyl group, linear non-ionic polyethylene glycol ether diols or a mixture thereof is comprised, wherein the third building block is preferably comprised in an amount of approximately 0,2 wt-% to approximately 7 wt-%, in each case referring to the total amount of the flame retardant prepolymer composition.

In a further preferred embodiment of the present invention, a flame retardant prepolymer composition is defined comprising approximately 80 wt-% to approximately 95 wt-% of at least one isocyanate-terminated polyurethane prepolymer and approximately 5 wt-% to approximately 20 wt-% of at least one non-aqueous solvent, wherein the at least one isocyanate-terminated polyurethane prepolymer contains approximately 5 wt-% to approximately 75 wt-% of at least one phosphonate oligomer, phosphonate monomer or a mixture thereof as a first building block, referring to the total amount of the at least one isocyanate-terminated polyurethane prepolymer, wherein preferably a fourth building block is an at least one isocyanate, wherein the NCO-value, which is calculated from GC, of the at least one isocyanate is in a range of approximately 25 wt-% to approximately 55 wt-%, in each case referred to the total amount of the isocyanate molecule, wherein the at least one iso-cyanate is preferably comprised in an amount of approximately 10 wt-% to approximately 50 wt-%, in each case referred to the total amount of the flame retardant prepolymer composition.

In a further preferred embodiment of the present invention, a flame retardant prepolymer composition is defined comprising approximately 80 wt-% to approximately 95 wt-% of at least one isocyanate-terminated polyurethane prepolymer and approximately 5 wt-% to approximately 20 wt-% of at least one non-aqueous solvent, wherein the at least one isocyanate-terminated polyurethane prepolymer contains approximately 5 wt-% to approximately 75 wt-% of at least one phosphonate oligomer, phosphonate monomer or a mixture thereof as a first building block, referring to the total amount of the isocyanate-terminated polyurethane prepolymer, the at least one non-aqueous solvent is preferably selected from a group comprising acetone, diethylamine, methanol, isopropanol, dichloromethane or a mixture thereof.

In a further preferred embodiment of the present invention, a flame retardant prepolymer composition is defined comprising approximately 80 wt-% to approximately 95 wt-% of at least one isocyanate-terminated polyurethane prepolymer and approximately 5 wt-% to approximately 20 wt-% of at least one non-aqueous solvent, wherein the at least one isocyanate-terminated polyurethane prepolymer contains approximately 10 wt-% to approximately 75 wt-% of at least one phosphonate oligomer, phosphonate monomer or a mixture thereof as a first building block, referring to the

total amount of the at least one isocyanate-terminated polyurethane prepolymer.

In an especially preferred embodiment of the present invention, a flame retardant prepolymer composition is defined comprising approximately 80 wt-% to approximately 95 wt-% of at least one isocyanate-terminated polyurethane prepolymer and approximately 5 wt-% to approximately 20 wt-% of at least one non-aqueous solvent, wherein the at least one isocyanate-terminated polyurethane prepolymer contains approximately 5 wt-% to approximately 55 wt-% of at least one phosphonate oligomer, phosphonate monomer or a mixture thereof as a first building block, referring to the total amount of the at least one isocyanate-terminated polyurethane prepolymer.

In an especially preferred embodiment of the present invention, a flame retardant polyurethane urea composition obtained from the flame retardant prepolymer composition by reacting the flame retardant prepolymer composition in at least one cross-linking step with approximately 0,5 wt-% to approximately 8 wt-% of at least one crosslinking agent.

In a further preferred embodiment of the present invention, a flame retardant polyurethane urea composition obtained from the flame retardant prepolymer composition by reacting the flame retardant prepolymer composition in at least one cross-linking step with approximately 0,5 wt-% to approximately 8 wt-% of at least one crosslinking agent, wherein the flame retardant prepolymer composition comprises approximately 80 wt-% to approximately 95 wt-% of at least one isocyanate-terminated polyurethane prepolymer and approximately 5 wt-% to approximately 20 wt-% of at least one non-aqueous solvent, wherein the at least one isocyanate-terminated polyurethane prepolymer contains approximately 5 wt-% to approximately 55 wt-% of at least one phosphonate oligomer, phosphonate monomer or a mixture thereof as a first building block, referring to the total amount of the at least one iso-cyanate-terminated polyurethane prepolymer.

In a further preferred embodiment of the present invention, a flame retardant polyurethane urea composition obtained from the flame retardant prepolymer composition by reacting the flame retardant prepolymer composition in at least one cross-linking step with approximately 0,5 wt-% to approximately 8 wt-% of at least one crosslinking agent, wherein the least one crosslinking agent is selected from a group comprising diamines, triamines, organic aminosilanes and/or carbodiimides.

In a further preferred embodiment of the present invention, a flame retardant polyurethane urea composition obtained from the flame retardant prepolymer composition by reacting the flame retardant prepolymer composition in at least one cross-linking step with approximately 0,5 wt-% to approximately 8 wt-% of at least one crosslinking agent, wherein an at least one neutralizing agent is preferably selected of a group comprising tertiary amines, amino alcohols, metal hydroxides, ammonia or a mixture thereof, wherein the at least one neutralizing agent is preferably used in a molar ratio of approximately 0,5 to approximately 1 to the total amount of the at least one multifunctional diol . The at least one neutralizing agent is used in a range of approximately 1 wt-% to approximately 3 wt-%, in each case referring to the total amount of the flame retardant polyurethane composition.

In a further preferred embodiment of the present invention, a flame retardant polyurethane urea composition obtained from the flame retardant prepolymer composition by reacting the flame retardant prepolymer composition in at least one cross-linking step with approximately 0,5 wt-% to approximately 8 wt-% of at least one crosslinking agent, wherein the flame retardant prepolymer composition comprises approximately 80 wt-% to approximately 95 wt-% of at least one isocyanate-terminated polyurethane prepolymer and approximately 5 wt-% to approximately 20 wt-% of at least one non-aqueous solvent, wherein the at least one isocyanate-terminated polyurethane prepolymer contains approximately 5 wt-% to approximately 55 wt-% of at least one phosphonate oligomer, phosphonate monomer or a mixture thereof as a first building block, referring to the total amount of the at least one iso-cyanate-terminated polyurethane prepolymer, wherein the least one crosslinking agent is selected from a group comprising diamines, triamines, organic aminosilanes and/or carbodiimides, and wherein an at least one neutralizing agent is preferably selected of a group comprising tertiary amines, amino alcohols, metal hydroxides, ammonia or a mixture thereof, wherein the at least one neutralizing agent is preferably used in a molar ratio of approximately 0,5 to approximately 1 to the total amount of the at least one isocyanate-terminated polyurethane prepolymer, wherein the non-volatile content of the flame retardant polyurethane composition is preferably in a range of approximately 25 wt-% to approximately 50 wt-%, in each case referring to the total amount of the flame retardant polyurethane composition.

The present invention will be described hereunder in more detail with reference to the following non-limitating examples in accordance with the present invention of the flame retardant prepolymer composition and the flame retardant polyurethane urea composition.

The pH value is detected with a pH meter set model pH50+DHS - COND51+ - PC52+DHS at 50°C. The products are measured with a dilution of 1:9 in water. The Calibration standards were a pH buffer solution with a pH of 4.01 $\pm$ 0.02 at 25°C and a pH buffer solution with a pH of 7.00 $\pm$ 0.02 at 25°C.

The viscosity was measured with a Brookfield DV2T EXTRA™ Viscometer. The viscosity was measured at 20°C with rotational frequency of 20 rpm and a spindle 2 of the RV EZ-Lock Spindle Set.

The non-volatile content, also known as active content, was measured with a Sartorius balance. 0.5 to 2.0 g of the inventive flame retardant polyurethane urea composition was poured on a filter paper made of Fiber Glass Filter and a diameter of 90mm in an disposable aluminum Sample Pan with an diameter of 90 mm and an height of 7 mm and

heated to 120°C for 30 min. The weight before $m_{wet}$ and the weight after heating $m_{dry}$ was detected. By calculating as set forth below, the weight percent of the non-volatile content could be determined by:

$$non-volatile\ content\ [wt-\%] = \frac{m_{dry}}{m_{wet}} \cdot 100\%$$.

The theoretical NCO value and the experimental NCO value were calculated as described above according to ISO 14896: 2009-07 Method A.

The fire performance measurements were carried out on the basis of the results obtained with the five test specimens each on paper and cellulose cloth comparable to the UL 94 VTM (Vertical flame test of thin materials: ASTM D4804). In this test, the tested materials are given test results comparable to the classifications of UL-94 VTM-0, UL-94 VTM-1 and UL-94 VTM-2. Briefly, the criteria for each of these UL-94-VTM-classifications are as follows:

**Table 1: Inflammability classification according to UL 94 VTM**

| Testing criteria | VTM-0 | VTM-1 | VTM-2 |
|---|---|---|---|
| After-burning time of each sample [s] (after the 1st and 2nd flame treatment) | ≤ 10 | ≤ 30 | ≤ 30 |
| Total of all after-burning times [s] (10 flame treatments). | ≤ 50 | ≤ 250 | ≤ 250 |
| Afterburning time plus afterglow time after 2nd flame treatment [s] | ≤ 30 | ≤ 60 | ≤ 60 |
| Burning dripping (inflammation of the cotton wool) | no | no | yes |
| Burn to the retaining clip (complete destruction of the sample) | no | no | no |

To judge the flame retardant effect of inventive flame retardant polyurethane urea composition coated fabrics were manufactured by using a paper or cellulose cloth which was impregnated with the inventive flame retardant polyurethane urea composition and dried at room temperature for 24h. In order to assess the flammability of the flame retardant polyurethane urea composition itself, a thin film of dried flame retardant polyurethane urea composition was prepared for the flammability test comparable to UL 94 by drying the flame retardant polyurethane urea composition at room temperature. The samples were treated with a flame having a height of about 20 mm for 3 seconds, after a 10 sec break the flame treatment was repeated for again 3 sec.

The following compounds were used in the preparation of the composition of Example 1, Example 2, Comparative example 3 and Table 2.

Polyol derived from ε-caprolactone as a white paste with a viscosity at 60°C of 150 mPA*s and a molecular weight of 1000 g/ mol obtainable as CAPA 2101 from Ingevity was used. Dimethylol propionic acid powder having a purity of 95-100% from Perstorp was used. Trimethylol propane flakes with a hydroxy number of 1238 - 1260 mg KOH/ g from Perstrop was used. Phosphonate oligomer powder with an ignition temperature of 590 to 600 °C obtainable as Nofia OL 1001 from FRX Polymers was used. Acetone with a purity of 98,5 % from Panreac was used. Isophorone diisocyante obtainable as Vestanat IPDI from Evonik was used. Triethylamine with a purity of 99 % from Alfa Aesar was used. As crosslinking agent γ-aminopropyl triethoxysilane with purity above 97 % obtainable as Genosil GF 93 silane from Wacker Silicones was used. Ethylene diamine with a purity of 99 % from Alfa Aesar was used.

Example 1: Preparation of flame retardant prepolymer composition

The following raw materials 401,7 g of polyol, 47,1 g of dimethylol propionic acid (Bis-MPA), 21 g of trimethylol propane (TMP) and 164,6g of phosphonate oligomer were charged into a round bottom flask equipped with a thermometer, an agitator and a condenser. Add 60 g of acetone to the polyol mixture. Heat the polyol mixture to 85-90 °C under good agitation. Before adding 365,5 g of isophorone diisocyante under stirring the polyol mixture was cooled down to 55°C. When the exothermic reaction has subsided the reaction mixture was heated to 75-80°C for 2 hours. When the reaction mixture reached the theoretical NCO value of 4.55 %, cool the reaction mixture down to 60-65°C. The NCO value is determined by the di-n-butylamine titration method A. After reaching the temperature of 60-65°C, 28 g of triethylamine for neutralization of the reaction mixture was added and the temperature was maintained for 20-30 min. 140 g of acetone

was poured to the reaction mixture to reduce the viscosity of the gained flame retardant prepolymer composition.

Example 2: Preparation of the flame retardant polyurethane urea composition

The flame retardant prepolymer composition was transferred into a plastic container containing 1300 g cold water under high-speed mixing. The addition of flame retardant prepolymer composition into the cold water was completed within 15 min. Once the addition was complete, 11,8 g of crosslinking agent diluted with 100 g deionized water was added. After 5 min subsequently a solution of 32 g ethylene diamine with 100 g deionized water was poured into the reaction mixture within 5-10 min. The reaction mixture was stirred with a stirring rate of 500 to 800 rpm for about 2-3 h. When the reaction time was over, the reaction mixture was filtered through a 70-100 micron filter and acetone was distilled off under reduced pressure to obtain an organic solvent free flame retardant polyurethane urea composition. Filtering the flame retardant polyurethane urea composition by using a 100-micron polyester filter bag gave the desired flame retardant polyurethane urea composition.

Comparative example 3: Preparation of a comparative polyurethane composition without fire performance:

The following raw materials 978,2 g of polyol based on polyester and 79,9 g of dimethylol propionic acid (Bis-MPA) were charged into a round bottom flask equipped with a thermometer, an agitator and a condenser. 120 g of acetone was added to the polyol mixture. The polyol mixture was heated to 75-80 °C under agitation. The polyol mixture was cooled down to 55°C then 544,2 g of isophorone diisocyante was added under stirring. When the exothermic reaction subsided the reaction mixture was heated to 75-80°C for 2 hours. When the reaction mixture reached the theoretical NCO value of 4.55 %, cool the reaction mixture down to 60-65°C. The NCO value is determined by the di-n-butylamine titration method A. After reaching the temperature of 60-65°C, 48,2 g of triethylamine for neutralization of the reaction mixture was added and the temperature was maintained for 20-30 min. 120 g of acetone was poured to the reaction mixture to reduce the viscosity of the gained prepolymer composition. The prepolymer composition was transferred into a plastic container containing 1519 g cold water under high-speed mixing. The addition of prepolymer composition into the cold water was completed within 15 min. Subsequently a solution of 48.1 g ethylene diamine with 747 g deionized water was poured into the reaction mixture within 5-10 min. The reaction mixture was stirred with a stirring rate of 500 to 800 rpm for about 2-3 h. When the reaction time was over, the reaction mixture was filtered through a 70-100 micron filter and acetone was distilled off under reduced pressure to obtain an organic solvent free polyurethane composition. Filtering the polyurethane composition by using a 100-micron polyester filter bag gave the desired comparative polyurethane composition.

The experimental results of the flame retardant polyurethane composition were shown in the following Table 2.

**Table 2: Comparison of the inventive example 2 and the comparative example 3**

| Parameters | Example 2 | Comparative example 3 |
|---|---|---|
| pH value | 8.21 pH | 8.63 pH |
| Viscosity, 20 °C | 190 mPa*s | 164 mPa*s |
| Non-volatile content | 40 wt-% | 40 wt-% |
| Fire Performance: | Paper: After-burning time of each sample <10 sec after the 1st flame treat-ment; after the 2nd flame treatment one out of five samples started burning (Total of all after-burning times <50 sec); no burning dripping<br>Cellulose Cloth: After-burning time of each sample <10 sec; no burning drip-ping | Paper: Burn to the retain-ing clip holding the sample; burning dripping (inflammation of the cotton wool)<br>Cellulose Cloth: Burn to the retaining clip holding the sample; burning dripping (inflammation of the cotton wool) |

From the above results, it was shown that the flame retardant polyurethane urea composition achieved flame retardancy comparable to the class UL-94 VTM-0 respectively UL-94 VTM-1 of the UL 94 flammability testing standards.

## Claims

1. Flame retardant prepolymer composition comprising at least one isocyanate-terminated polyurethane prepolymer wherein the at least one isocyanate-terminated polyurethane prepolymer is prepared by at least one diol and/or at least one polyol, and an at least one isocyanate, and contains at least one phosphonate oligomer, phosphonate

monomer or a mixture thereof, used as a first building block, in an amount of from 5 to 75 parts by weight, referring to the total amount of the at least one isocyanate-terminated polyurethane prepolymer, wherein the at least one phosphonate oligomer, phosphonate monomer or a mixture thereof contains units according to the following structural formula

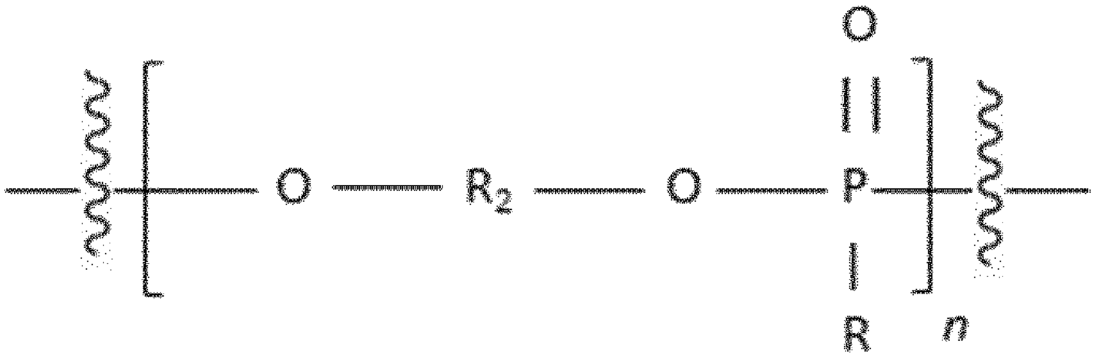

in which n is an integer from 1 to 20, R is a C1-20 alkyl, C2-20 alkene, C2-20 alkyne, C3-20 cycloalkyl, or C6-20 aryl, and R2 is an aliphatic and/or aromatic group,
wherein a NCO value is in a range between 4.1 % ±20 % to 6.4 % ±20 % obtained by titration against a dibutylamine/tolulene solution as per ISO 14896: 2009-07 Method A, wherein the term "NCO value" defines the percentage of free isocyanate groups of the at least one isocyanate-terminated polyurethane prepolymer in the inventive flame retardant prepolymer composition,
whereby the diol and the polyol are selected from a group comprising polyetherglycols, polyester diols, polycarbonates, polytetrahydrofurans, dimer diols, fatty acids, dimerized fatty acid based diols and/ or (BES: biobased) polyester based diols in the manufacturing process of the at least one isocyanate-terminated polyurethane prepolymer.

**2.** The flame retardant prepolymer composition according to claim 1, wherein an at least one non-aqueous solvent is comprised.

**3.** The flame retardant prepolymer composition according to one or more of the preceding claims, wherein n is from 1 to 10, and R2 is an aromatic group.

**4.** The flame retardant prepolymer composition according to one or more of the preceding claims, wherein R is a methyl group.

**5.** The flame retardant prepolymer composition according to one or more of the preceding claims, wherein the phosphonate oligomer used in the preparation of the at least one isocyanate-terminated polyurethane is a phosphonate diol selected from the group consisting of a random co-oligo(phosphonate carbonate), a block co-oligo(phosphonate carbonate), a random co-oligo(phosphonate ester), a block co-oligo(phosphonate ester) or any mixture thereof.

**6.** The flame retardant prepolymer composition according to one or more of the preceding claims, wherein the phosphonate oligomer building block has a structure according to one of the following formulae:

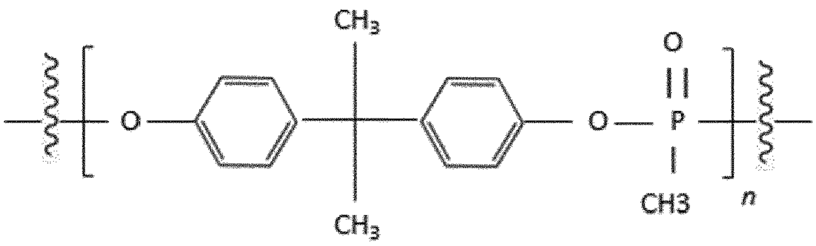

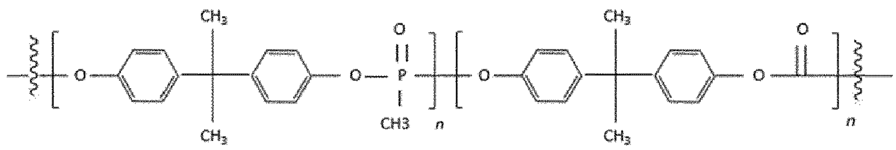

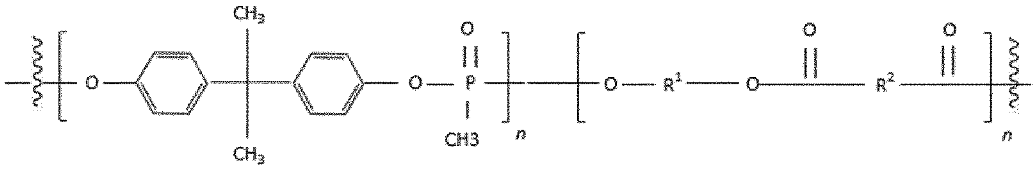

in which R1 and R2 are aliphatic or aromatic hydrocarbons, and n is an integer from 1 to 20.

7. The flame retardant prepolymer composition according to one or more of the preceding claims, wherein the phosphonate oligomer used in the preparation of the at least one isocyanate-terminated polyurethane is a copolymer of bisphenol-A and diphenyl methyl phosphonate.

8. The flame retardant prepolymer composition according to one or more of the preceding claims, wherein the at least one diol and/or at least one polyol is a multifunctional diol selected from the group comprising trifunctional diols, branched diols with an at least one hydroxyl group and an at least one carboxyl group, linear polyethylene glycol ether diols or a mixture of at least two of them.

9. The flame retardant prepolymer composition according to one or more of the preceding claims, wherein the polyester diol is obtained by a reaction of at least one lactone and at least one diol.

10. The flame retardant prepolymer composition according to claim 9, wherein the at least one lactone is ε-caprolactone.

11. The flame retardant prepolymer composition according to claim 9, wherein the at least one diol is a polyester polyol.

12. Flame retardant polyurethane urea composition obtained from the flame retardant prepolymer composition according to one or more of claims 1 to 11 by reacting the flame retardant prepolymer composition in at least one cross-linking step with at least one crosslinking agent selected from a group comprising diamines, triamines, organic aminosilanes and/or carbodiimides.

13. The flame retardant polyurethane urea composition according to claim 12, wherein the at least one diamine and/or triamine is selected from a group comprising alkyldiamines and alkyltriamines.

14. The flame retardant polyurethane urea composition according to one or more of claims 12 to 13, wherein at least one neutralization step is carried out before the at least one crosslinking step.

15. The flame retardant polyurethane urea composition according to claim 14, wherein at least one neutralization step is carried out by using at least one neutralizing agent selected of a group comprising tertiary amines, amino alcohols, metal hydroxides, ammonia or a mixture thereof.

16. The flame retardant polyurethane urea composition according to one or more of claims 12 to 15, wherein in the at least one crosslinking step, before the at least one crosslinking step, or after the at least one crosslinking steps, water is added in order to obtain a polyurethane composition dispersion.

17. Method for manufacturing a flame retardant prepolymer composition in accordance with one or more of claims 1 to 11, whereby

- mixing of at least one phosphonate oligomer, used as a first building block, at least one polyether glycol, at least one diol and/or at least one polyol with at least one non-aqueous solvent, and heating said solution to a temperature in a range from 30°C ±20 % to 100°C ±20 %;
- adding at least one isocyanate in excess to relation to the total amount of the at least one polyetherglycol, at least one diol and/or at least one polyol;

- heating the obtained solution to a temperature in a range from 65°C ±20 % to 96°C ±20 % until a NCO value is in a range between 4.1% ±20 % to 6.4 % ±20 %, obtained by titration against a dibutylamine/tolulene solution as per ISO 14896: 2009-07 Method A, wherein the term "NCO value" defines the percentage of free isocyanate groups of the at least one iso-cyanate-terminated polyurethane prepolymer in the inventive flame retardant prepolymer composition.

**18.** Method for manufacturing a flame retardant polyurethane urea composition in accordance with one or more of claims 12 to 16, whereby

- providing a flame retardant prepolymer composition manufactured in accordance with claim 17;
- adding water to obtain a polyurethane dispersion; and
- adding at least one crosslinking agent.

**19.** Method for manufacturing a flame retardant polyurethane urea composition in accordance with claim 18, whereby the non-aqueous solvent is evaporated in order to obtain an aqueous isocyanate-terminated polyurethane composition.

**20.** Use of a flame retardant polyurethane urea composition in accordance with one or more of claims 12 to 16 or obtained by the manufacturing method in accordance with one or more of claims 18 to 19, as a flame retardant agent in paints, lacquers, intumescent coatings, wood, leather and paper.

## Patentansprüche

**1.** Flammschutzmittelpräpolymerzusammensetzung umfassend wenigstens ein Isocyanatterminiertes Polyurethanpräpolymer, wobei das wenigstens eine Isocyanat-terminierte Polyurethanpräpolymer hergestellt ist aus wenigstens einem Diol und/oder wenigstens einem Polyol und wenigstens ein Isocyanat, und wenigstens ein Phosphonatoligomer, Phosphonatmonomer oder einer Mischung dieser, das als ein erster Baustein verwendet ist, in einer Menge von wenigstens 5 bis 75 Gew.-%, bezogen auf die Gesamtmenge des wenigstens einen Isocyanat-terminierten Polyurethanpräpolymer, aufweist, wobei das wenigstens eine Phosphonatoligomer, Phosphonatmonomer oder eine Mischung derselben Einheiten gemäß der folgenden Strukturformel aufweist:

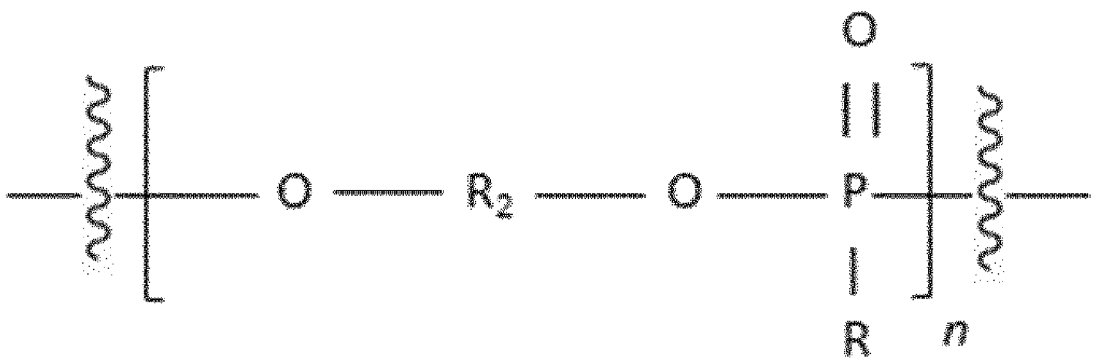

wobei n eine ganze Zahl von 1 bis 20, R ein C1-20 Alkyl, C2-20 Alken, C2-20 Alkin, C3-20 Cycloalkyl oder C6-20 Aryl ist und R2 eine aliphatische und/oder aromatische Gruppe ist,
wobei ein NCO-Wert in einem Bereich zwischen 4,1 % +/- 20 % bis 6,4 % +/- 20 % liegt, erhalten durch die Titration gegen eine Dibutylamin/Toluol-Lösung gemäß ISO 14896: 2009-07 Methode A, wobei der Begriff "NCO-Wert" den Anteil von freien Isocyanat-Gruppen des wenigstens einen Isocyanat-terminierten Polyurethanpräpolymers in der erfindungsgemäßen Flammschutzpräpolymerzusammensetzung definiert,
wobei das Diol und das Polyol im Herstellungsprozess des wenigstens einen Isocyanat-terminierten Polyurethanpräpolymers ausgewählt sind aus einer Gruppe umfassend Polyetherglykole, Polyesterdiole, Polycarbonate, Polytetrahydrofurane, dimere Diole, Fettsäuren, dimerisierte Fettsäure-basierte Diole und/oder (BES: biobasierte) polyesterbasierte Diole.

**2.** Flammschutzmittelpräpolymerzusammensetzung gemäß Anspruch 1, wobei wenigstens ein nichtwässriges Lösungsmittel von dieser umfasst ist.

3. Flammschutzmittelpräpolymerzusammensetzung gemäß einem oder mehreren der vorhergehenden Ansprüche, wobei n von 1 bis 10 beträgt und R2 eine aromatische Gruppe ist.

4. Flammschutzmittelpräpolymerzusammensetzung gemäß einem oder mehreren der vorhergehenden Ansprüche, wobei Reine Methylgruppe ist.

5. Flammschutzmittelpräpolymerzusammensetzung gemäß einem oder mehreren der vorhergehenden Ansprüche, wobei das Phosphonatoligomer, welches in der Herstellung des wenigstens einen Isocyanat-terminierten Polyurethanpräpolymer eingesetzt ist, ein Phosphonatdiol ist, ausgewählt aus einer Gruppe bestehend aus einem Random Co-Oligo(Phosphonatcarbonat), einem Block Co-Oligo(Phosphonatcarbonat), einem Random Co-Oligo(Phosphonatester), einem Block Co-Oligo(Phosphonatester) oder Mischungen dieser.

6. Flammschutzmittelpräpolymerzusammensetzung gemäß einem oder mehreren der vorhergehenden Ansprüche, wobei der Phosphonatoligomer-Baustein eine Struktur gemäß einer der folgenden Formeln aufweist:

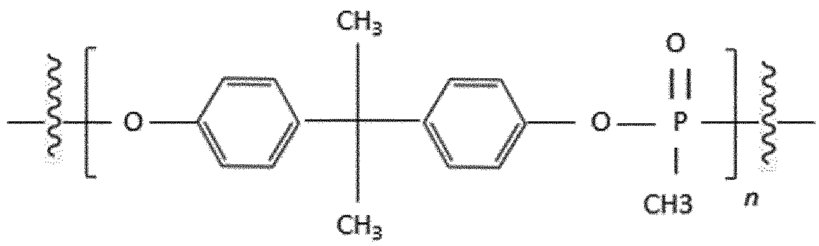

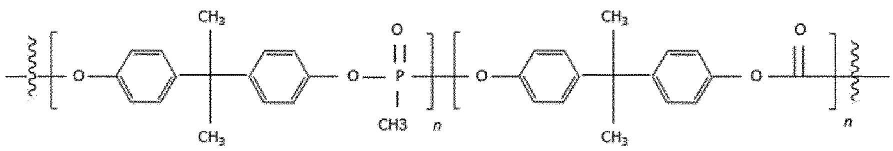

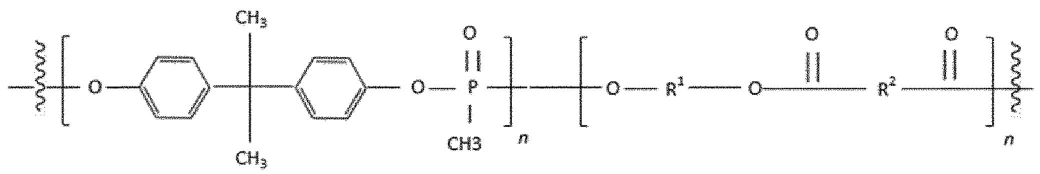

wobei R1 und R2 aliphatische oder aromatische Kohlenwasserstoffe sind und n eine ganze Zahl zwischen 1 und 20 ist.

7. Flammschutzmittelpräpolymerzusammensetzung gemäß einem oder mehreren der vorhergehenden Ansprüche, wobei das Phosphonatoligomer, welches in der Herstellung des wenigstens einen Isocyanat-terminierten Polyurethanpräpolymers eingesetzt ist, ein Copolymer aus Bisphenol-A und Diphenylmethylphosphonat ist.

8. Flammschutzmittelpräpolymerzusammensetzung gemäß einem oder mehreren der vorhergehenden Ansprüche, wobei das mindestens eine Diol und/oder das mindestens eine Polyol ein multifunktionales Diol ist, ausgewählt aus einer Gruppe umfassend trifunktionale Diole, verzweigte Diole mit wenigstens einer Hydroxylgruppe und wenigstens einer Carboxylgruppe, lineare Polyethylenglycoletherdiole oder Mischungen wenigstens zweier der vorgenannten Substanzen.

9. Flammschutzmittelpräpolymerzusammensetzung gemäß einem oder mehreren der vorhergehenden Ansprüche, wobei das Polyesterdiol erhalten ist durch eine Reaktion wenigstens eines Lactons und wenigstens eines Diols.

10. Flammschutzmittelpräpolymerzusammensetzung gemäß Anspruch 9, wobei das wenigstens eine Lacton ein ε-Caprolacton ist.

11. Flammschutzmittelpräpolymerzusammensetzung gemäß Anspruch 9, wobei das wenigstens eine Diol ein Polyesterpolyol ist.

**12.** Flammschutzpolyurethanharnstoffzusammensetzung erhältlich aus der Flammschutzmittelpräpolymerzusammensetzung gemäß einem oder mehreren der Ansprüche 1 bis 11 durch Reaktion der Flammschutzmittelpräpolymerzusammensetzung in wenigstens einem Vernetzungsschritt mit wenigstens einem Vernetzungsmittel, ausgewählt aus einer Gruppe umfassend Diamine, Triamine, organische Aminosilane und/oder Carbodiimide.

**13.** Flammschutzpolyurethanharnstoffzusammensetzung gemäß Anspruch 12, wobei das wenigstens eine Diamin und/oder Triamin ausgewählt ist aus einer Gruppe umfassend Alkyldiamine und Alkyltriamine.

**14.** Flammschutzpolyurethanharnstoffzusammensetzung gemäß einem oder mehreren der Ansprüche 12 bis 13, wobei wenigstens ein Neutralisierungsschritt vor dem wenigstens einen Vernetzungsschritt ausgeführt ist.

**15.** Flammschutzpolyurethanharnstoffzusammensetzung gemäß Anspruch 14, wobei der wenigstens eine Neutralisierungsschritt durchgeführt ist unter Verwendung wenigstens eines Neutralisierungsmittels ausgewählt aus einer Gruppe umfassend tertiäre Armine, Aminoalkohole, Metallhydroxide, Ammoniak oder Mischungen dieser.

**16.** Flammschutzpolyurethanharnstoffzusammensetzung gemäß einem oder mehreren der Ansprüche 12 bis 15, wobei in dem wenigstens einen Vernetzungsschritt vor dem wenigstens einen Vernetzungsschritt oder nach dem wenigstens einen Vernetzungsschritt Wasser zugefügt ist, um eine Polyurethanzusammensetzung als Dispersion zu erhalten.

**17.** Verfahren zur Herstellung einer Flammschutzmittelpräpolymerzusammensetzung in Übereinstimmung mit einem oder mehreren der Ansprüche 1 bis 11, wobei

- wenigstens ein Phosphonatoligomer, welches als erster Baustein verwendet wird, mit wenigstens einem Polyetherglycol, wenigstens einem Diol und/oder wenigstens einem Polyol in wenigstens einem nichtwässrigen Lösemittel gemischt und diese Lösung auf eine Temperatur in einem Bereich von 30°C +/- 20 % bis 100°C +/- 20 % erwärmt wird;
- Zugabe mindestens eines Isocyanates im Überschuss in Bezug auf die Gesamtmenge des wenigstens einen Polyetherglycols, wenigstens einen Diols und/oder wenigstens einen Polyols;
- Erwärmung der erhaltenen Lösung auf eine Temperatur in einem Bereich von 65°C +/- 20 % bis 96°C +/- 20 %, bis ein NCO-Wert in einem Bereich zwischen 4,1 % +/- 20 % bis 6,4 % +/- 20 % vorliegt, erhalten durch Titration gegen eine Dibutylamin/ToluolLösung gemäß ISO 14896: 20009-07 Methode A, wobei der Begriff "NCO-Wert" den Anteil der freien Isocyanat-Gruppen des wenigstens einen Isocyanat-terminierten Polyurethanpräpolymers in der erfindungsgemäßen Flammschutzmittelpräpolymerzusammensetzung definiert.

**18.** Verfahren zur Herstellung einer Flammschutzpolyurethanharnstoffzusammensetzung gemäß einem oder mehreren der Ansprüche 12 bis 16, wobei

- eine Flammschutzmittelpräpolymerzusammensetzung hergestellt in Übereinstimmung mit Anspruch 17 zur Verfügung gestellt wird;
- Wasser zum Erhalt einer Polyurethandispersion zugegeben wird; und
- wenigstens ein Vernetzungsmittel zugegeben wird.

**19.** Verfahren zur Herstellung einer Flammschutzpolyurethanharnstoffzusammensetzung in Übereinstimmung mit Anspruch 18, wobei das nichtwässrige Lösemittel verdampft wird, um eine wässrige Isocyanat-terminierte Polyurethanzusammensetzung zu erhalten.

**20.** Verwendung einer Flammschutzpolyurethanharnstoffzusammensetzung in Übereinstimmung mit einem oder mehreren der Ansprüche 12 bis 16 oder erhalten durch das Herstellungsverfahren in Übereinstimmung mit einem oder mehreren der Ansprüche 18 bis 19 als ein Flammschutzmittel in Farben, Lacken, intumeszierenden Beschichtungen, Holz, Leder und Papier.

## Revendications

**1.** Composition de prépolymère ignifuge comprenant au moins un prépolymère de polyuréthane à terminaison isocyanate, dans laquelle ledit au moins un prépolymère de polyuréthane à terminaison isocyanate est préparé par au moins un diol et/ou au moins un polyol, et au moins un isocyanate, et contient au moins un oligomère phosphonate,

un monomère phosphonate ou un mélange de ceux-ci, utilisé comme premier bloc de construction, dans une proportion qui est comprise entre 5 parties en poids et 75 parties en poids par rapport à la quantité totale dudit au moins un prépolymère polyuréthane à terminaison isocyanate, dans laquelle ledit au moins un oligomère phosphonate, ledit au moins un monomère phosphonate ou un mélange de ceux-ci contient des unités selon la formule structurelle suivante :

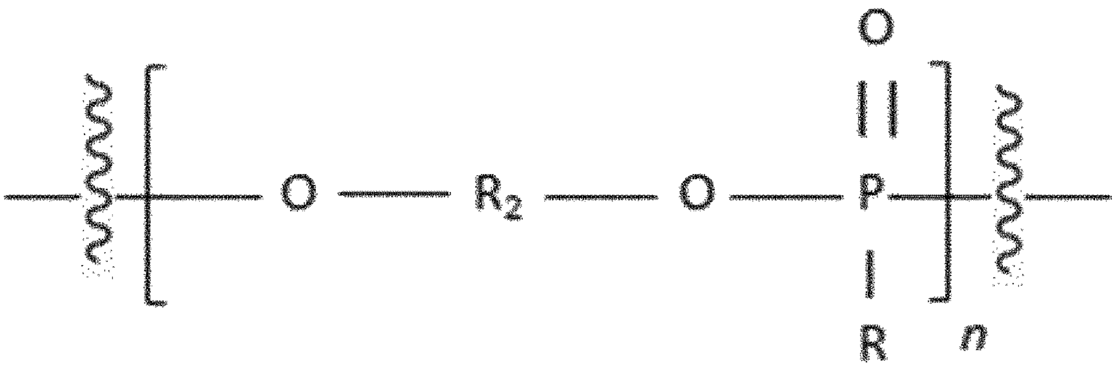

dans laquelle n est un nombre entier qui est compris entre 1 et 20, R est un alkyle en C1-20, un alcène en C2-20, un alcyne en C2-20, un cycloalkyle en C3-20 ou un aryle en C6-20, et R2 est un groupe aliphatique et/ou un groupe aromatique,

dans laquelle la valeur de NCO est comprise entre 4,1 % ± 20 % et 6,4 % ± 20 %, obtenue par titrage par rapport à une solution de dibutylamine/toluène conformément à la norme ISO 14896 : 2009-07 Méthode A, dans laquelle le terme "valeur de NCO" définit le pourcentage de groupes isocyanates libres dudit au moins un prépolymère polyuréthane à terminaison isocyanate dans la composition prépolymère ignifuge selon l'invention, et

dans laquelle le diol et le polyol sont sélectionnés dans un groupe comprenant les polyétherglycols, les polyester diols, les polycarbonates, les polytétrahydrofuranes, les dimères diols, les acides gras, les diols à base d'acides gras dimérisés et/ou les diols à base de polyester (BES : biosourcés) dans le processus de fabrication dudit au moins un prépolymère de polyuréthane à terminaison isocyanate.

**2.** Composition prépolymère ignifuge selon la revendication 1, dans laquelle au moins un solvant non aqueux est incorporé.

**3.** Composition prépolymère ignifuge selon une ou plusieurs des revendications précédentes, dans laquelle n est compris entre 1 et 10, et R2 est un groupe aromatique.

**4.** Composition prépolymère ignifuge selon une ou plusieurs des revendications précédentes, dans laquelle R est un groupe méthyle.

**5.** Composition prépolymère ignifuge selon une ou plusieurs des revendications précédentes, dans laquelle l'oligomère phosphonate qui est utilisé dans la préparation dudit au moins un polyuréthane à terminaison isocyanate est un diol phosphonate qui est sélectionné dans le groupe comprenant un co-oligo(carbonate de phosphonate) aléatoire, un co-oligo(carbonate de phosphonate) à blocs, un co-oligo(ester phosphonate) aléatoire, un co-oligo(ester phosphonate) à blocs ou tout mélange de ceux-ci.

**6.** Composition prépolymère ignifuge selon une ou plusieurs des revendications précédentes, dans laquelle le bloc de construction à base oligomère phosphonate présente une structure selon l'une des formules suivantes :

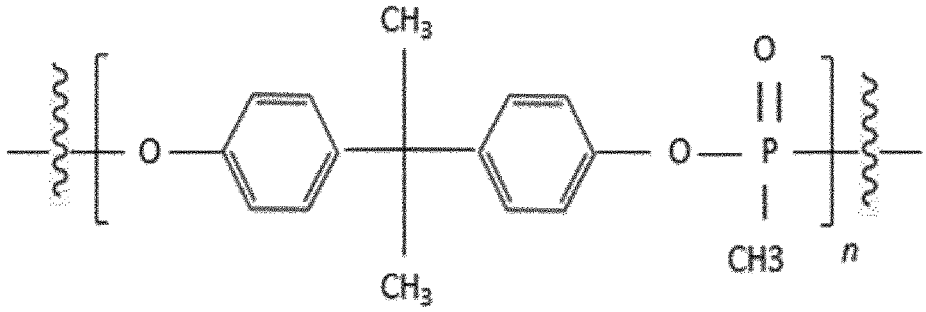

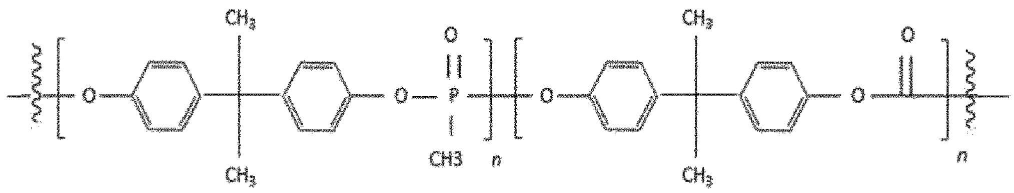

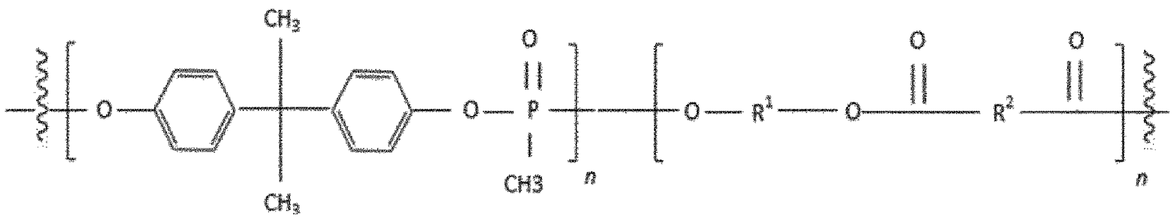

dans laquelle R1 et R2 sont des hydrocarbures aliphatiques ou aromatiques, et n est un nombre entier qui est compris entre 1 et 20.

**7.** Composition prépolymère ignifuge selon une ou plusieurs des revendications précédentes, dans laquelle l'oligomère phosphonate qui est utilisé dans la préparation dudit au moins un polyuréthane à terminaison isocyanate est un copolymère de bisphénol-A et de diphényl méthyl phosphonate.

**8.** Composition prépolymère ignifuge selon une ou plusieurs des revendications précédentes, dans laquelle ledit au moins un diol et/ou ledit au moins un polyol est un diol multifonctionnel qui est sélectionné dans le groupe comprenant les diols trifonctionnels, les diols ramifiés avec au moins un groupe hydroxyle et au moins un groupe carboxyle, les diols éther de polyéthylène glycol linéaires ou un mélange d'au moins deux de ceux-ci.

**9.** Composition prépolymère ignifuge selon une ou plusieurs des revendications précédentes, dans laquelle le polyester diol est obtenu par la réaction d'au moins une lactone et d'au moins un diol.

**10.** Composition prépolymère ignifuge selon la revendication 9, dans laquelle ladite au moins une lactone est la ε-caprolactone.

**11.** Composition prépolymère ignifuge selon la revendication 9, dans laquelle ledit au moins un diol est un polyester polyol.

**12.** Composition polyuréthane-urée ignifuge obtenue à partir de la composition prépolymère ignifuge selon une ou plusieurs des revendications 1 à 11 en faisant réagir la composition prépolymère ignifuge au cours d'au moins une étape de réticulation avec au moins un agent de réticulation qui est sélectionné dans un groupe comprenant les diamines, les triamines, les aminosilanes organiques et/ou les carbodiimides.

**13.** Composition de polyuréthane-urée ignifuge selon la revendication 12, dans laquelle ladite au moins une diamine et/ou ladite a moins une triamine est sélectionnée dans un groupe comprenant les alkyldiamines et les alkyltriamines.

**14.** Composition de polyuréthane-urée ignifuge selon une ou plusieurs des revendications 12 à 13, dans laquelle au moins une étape de neutralisation est exécutée avant ladite au moins une étape de réticulation.

**15.** Composition de polyuréthane-urée ignifuge selon la revendication 14, dans laquelle au moins une étape de neutralisation est exécutée en utilisant au moins un agent de neutralisation qui est sélectionné dans un groupe comprenant les amines tertiaires, les aminoalcools, les hydroxydes métalliques, l'ammoniaque ou un mélange de ceux-ci.

**16.** Composition de polyuréthane-urée ignifuge selon une ou plusieurs des revendications 12 à 15, dans laquelle, au cours de ladite au moins une étape de réticulation, avant ladite au moins une étape de réticulation, ou après ladite au moins une étape de réticulation, une quantité d'eau est ajoutée dans le but d'obtenir une dispersion de composition de polyuréthane.

**17.** Procédé de fabrication d'une composition prépolymère ignifuge selon une ou plusieurs des revendications 1 à 11, comprenant les étapes suivantes :

- mélanger au moins un oligomère phosphonate, qui est utilisé comme premier bloc de construction, au moins un polyéther glycol, au moins un diol et/ou au moins un polyol avec au moins un solvant non aqueux, et chauffer cette solution à une température qui est comprise entre 30°C $\pm$ 20 % et 100°C $\pm$ 20 % ;
- ajouter au moins un isocyanate en excès par rapport à la quantité totale dudit au moins un polyétherglycol, dudit au moins un diol et/ou dudit au moins un polyol ; et
- chauffer la solution obtenue à une température qui est comprise entre 6°C $\pm$ 20 % et 96°C $\pm$ 20 % jusqu'à ce que la valeur de NCO soit comprise entre 4,1 % $\pm$ 20 % et 6,4 % $\pm$ 20 %, obtenue par titrage par rapport à une solution de dibutylamine/toluène conformément à la norme ISO 14896 : 2009-07 Méthode A, dans lequel le terme "valeur de NCO" définit le pourcentage de groupes isocyanates libres dudit au moins un prépolymère polyuréthane à terminaison isocyanate dans la composition prépolymère ignifuge selon l'invention.

**18.** Procédé de fabrication d'une composition polyuréthane-urée ignifuge selon une ou plusieurs des revendications 12 à 16, comprenant les étapes suivantes :

- fournir une composition prépolymère ignifuge fabriquée selon la revendication 17 ;
- ajouter de l'eau de manière à obtenir une dispersion de polyuréthane ; et
- ajouter au moins un agent de réticulation.

**19.** Procédé de fabrication d'une composition polyuréthane-urée ignifuge selon la revendication 18, dans lequel le solvant non aqueux est évaporé dans le but d'obtenir une composition aqueuse de polyuréthane à terminaison isocyanate.

**20.** Utilisation d'une composition de polyuréthane-urée ignifuge selon une ou plusieurs des revendications 12 à 16 ou obtenue par le procédé de fabrication selon une ou plusieurs des revendications 18 à 19 comme agent ignifuge dans les peintures, les laques, les revêtements intumescents, le bois, le cuir et le papier.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017055356 A1
- JP 2015193763 A
- WO 2009142999 A1